# EUROPÄISCHE PATENTSCHRIFT

(11) **EP 1 694 980 B1**
(45) Veröffentlichungstag und Bekanntmachung des Hinweises auf die Patenterteilung: **16.01.2008**
(21) Anmeldenummer: 04789558.6
(22) Anmeldetag: 25.10.2004
(51) Int. Cl.: F16F 13/00, A45B 9/00, A63C 11/22, F16F 7/09

(54) **DÄMPFUNGSVORRICHTUNG**
DAMPING DEVICE
DISPOSITIF AMORTISSEUR

(30) Priorität: 15.12.2003 AT 8922003
(43) Veröffentlichungstag der Anmeldung: 30.08.2006
(73) Patentinhaber: Komperdell Sportartikel Gesellschaft m.b.H., 5310 Mondsee (AT)
(72) Erfinder: ROISER, Thomas, A-5310 Mondsee (AT)
(74) Vertreter: Hehenberger, Reinhard
(86) Internationale Anmeldenummer: PCT/AT2004/000369
(87) Internationale Veröffentlichungsnummer: WO 2005/057044

(56) Entgegenhaltungen:
- FR-A- 1 072 006
- FR-A- 2 100 053
- FR-A- 2 387 064
- US-A- 2 705 634
- US-A- 4 768 629

## Beschreibung

Die Erfindung betrifft eine Vorrichtung zum Dämpfen der Relativbewegung zwischen zwei relativ zueinander beweglichen Körpern, insbesondere zwischen zwei Teilen eine Stockes, vornehmlich zwischen einem Griff und einem Stab eines Stocks, mit den Merkmalen des einleitenden Teils von Anspruch 1.

Solche Dämpfungsvorrichtungen werden insbesondere für Stöcke mit Griff, bei welchen der Griff relativ zum Stock in Achsrichtung gegen die Kraft einer Feder beweglich ist, verwendet, um die Aufprallenergie beim Aufsetzen des Stockes, insbesondere auf hartem Untergrund, vibrationsarm zu absorbieren.

Bekannte Vorrichtungen dieser Art besitzen zwischen dem Stock und dem Griff eine auf einem Stahlstab geführte Stahlschraubendruckfeder, die sich in Längsrichtung des Stockes erstreckt.

Andere Vorschläge benützen die Kombination einer Stahlschraubendruckfeder mit an beiden Seiten der Feder angeordneten Elastomerkörpern, wodurch eine verbesserte Dämpfwirkung erreicht werden soll.

Eine Vorrichtung der eingangs genannten Gattung ist an der FR-A-2 387 064 bekannt.

Der Erfindung liegt die Aufgabe zu Grunde, eine Vorrichtung der eingangs genannten Art vorzustellen, deren Dämpfwirkung verbessert ist.

Gelöst wird diese Aufgabe erfindungsgemäß mit einer Vorrichtung, die sich durch die Merkmale des unabhängigen Anspruches auszeichnet.

Bevorzugte und vorteilhafte Ausgestaltungen der erfindungsgemäßen Dämpfungsvorrichtung sind Gegenstand der Unteransprüche.

Bei der erfindungsgemäßen Dämpfungsvorrichtung wird in vorteilhafter Weise die Wirkung einer (Metall-) Schraubendruckfeder mit der Wirkung einer Gasdruckfeder kombiniert. Dadurch ergibt sich eine dämpfende Wirkung, die zunächst gering ist und bei zunehmend zusammengedrückter Dämpfungsvorrichtung zunimmt, bis schließlich das Ende des Hubes der Dämpfungsvorrichtung erreicht ist.

Bei der Erfindung ist vorgesehen, dass ein stabförmiger Körper mit seinem unteren Ende in einem einseitig geschlossenen Rohr aufgenommen ist, und dass an seinem Ende, das im Rohr aufgenommen ist, eine sich durch Druck auf den stabförmigen Körper in Richtung des Verschiebens in das Rohr hinein aktivierende Dichtung zwischen stabförmigen Körper und Rohr vorgesehen ist. Vorteilhaft ist bei dieser Ausführungsform, dass der Kolben der Gasdruckfeder mit einer sich automatisch aktivierenden, auch als Ventil wirkenden Ringdichtung ausgestattet ist, derart dass sich das von der Ringdichtung gebildete Ventil beim Zusammendrücken der Gasdruckfeder (beim Aufsetzen des Stockes) schließt, und beim Auseinanderbewegen der Gasdruckfeder offen ist.

In einer Ausführungsform ist vorgesehen, dass am offenen Ende des Rohres eine Endanschlagdämpfung vorgesehen ist. Bevorzugt ist dabei, dass bei in das Rohr hineingeschobenem stabförmigen Körper der ringförmige Endanschlag an der Endanschlagdämpfung anliegt und diese zwischen dem offenen Ende des Rohres und dem Endanschlag klemmt. Dies hat den Vorteil, dass die Dämpfungsvorrichtung am Ende ihres Hubes sanft und nicht schlagartig aufgefangen und abgestoppt wird.

Weitere Einzelheiten und Merkmale der Erfindung ergeben sich aus der nachstehenden Beschreibung eines bevorzugten Ausführungsbeispieles anhand der Zeichnungen.

Es zeigen die Figuren 1 bis 5 verschiedene Stellungen der erfindungsgemäßen Dämpfungsvorrichtung, Fig. 6 einen Schistock und Fig. 7 ein Einbaubeispiel einer Dämpfungsvorrichtung in den Schistock.

Die erfindungsgemäße Dämpfungsvorrichtung besteht aus einem in einem Rohr 3 aufgenommenen stabförmigen Körper 5, der an seinem oberen Ende einen Ringflansch 7 trägt. Mit Abstand vom oberen Ende des stabförmigen Körpers 5 ist ein ringförmiger Anschlag 9 für die Begrenzung des Hubes des stabförmigen Körpers 5 relativ zum Rohr 3 vorgesehen.

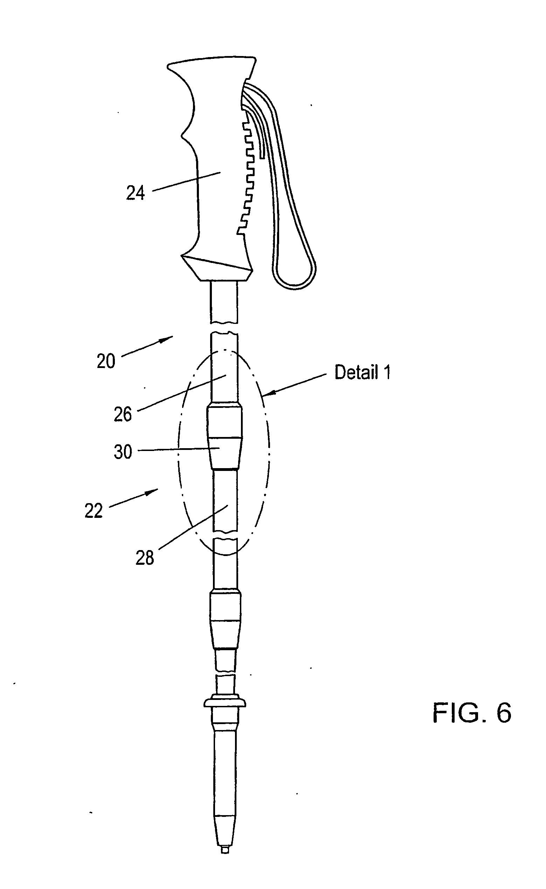

Der stabförmige Körper 5 ist mit seinem Bereich, der unterhalb einer Endanschlagdämpfung 11 in Form einer Gummifeder angeordnet ist in dem Rohr 3 eines Stockes, beispielsweise eines Schi- oder Wanderstockes aufgenommen (vgl. Fig 6).

An seinem im Rohr 3 aufgenommenen Ende trägt der stabförmige Körper 5 eine elastisch verformbare Dichtung 13 in Form einer Scheibe, die am freien Ende des stabförmigen Körpers 5 durch eine relativ zum Stab 5 axial bewegliche Zwischenscheibe 15 abgedeckt ist. Unterhalb der Zwischenscheibe 15 ist eine Schraubendruckfeder 17 vorgesehen, die an der Zwischenscheibe 15 anliegt und die sich mit ihrem anderen Ende am geschlossenen Ende 19 des Rohres 3, in dem der Stab 5 aufgenommen ist, abstützt.

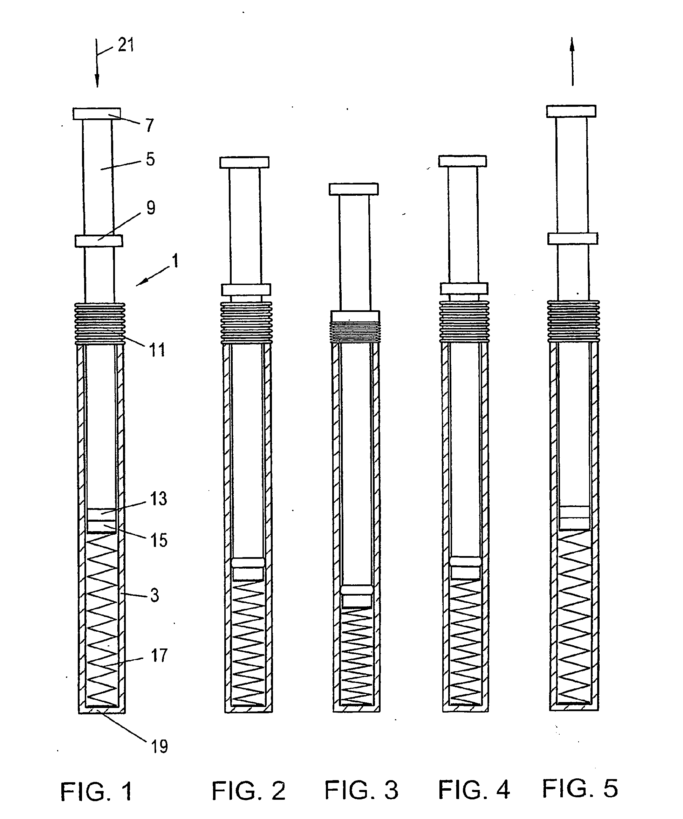

Wird nun in Richtung des in Fig. 1 gezeigten Pfeils 21 auf den stabförmigen Körper 5 gedrückt, so bewegt sich dieser in das Rohr 3 hinein, wobei die elastische Einlage 13 durch den von der Feder 17 auf die Zwischenscheibe 15 ausgeübten Druck so verformt wird, dass sich ihre Seitenfläche, die zunächst im wesentlichen zylindermantelförmig ist, wulstförmig nach außen wölbt und sich an der Innenfläche des Rohres 3 anlegt (Ringdichtung). So wird Gas (Luft) im Rohr 3 im Bereich der Schraubenfeder 17 eingeschlossen und wirkt als die Federkraft der Schraubenfeder 17 unterstützende Gasdruckfeder (Fig. 2). Bei fortgesetzter Bewegung des stabförmigen Körpers 5 nach unten (Fig.3) wird der Druck der Feder 17 auf die Zwischenscheibe 15 größer und die elastische Einlage 13 wird mit ihrer Umfangsfläche immer stärker gegen die Innenfläche des Rohres 3 gepresst, so dass die Reibung zwischen der Außenseite der Einlage 13 und der Innenfläche des Rohres 3 stetig vergrößert wird und so die Dämpfungswirkung durch zunehmende Reibung nach und nach verstärkt wird.

Am Ende der Bewegung des stabförmigen Körpers 5 nach unten liegt dessen Anschlag 9 an der Endanschlagdämpfung 11 auf, die beispielsweise ein elastisch verformbarer Körper ist, der nach Art eines Faltenbalges ausgebildet sein kann.

Wenn der Druck in Richtung des in Fig. 1 eingezeichneten Pfeils 21 aufhört, nimmt die elastisch verformbare Einlage 13 wieder ihre zylinderförmige Form an, und die Schraubendruckfeder 17 schiebt den stabförmigen Körper 5 nach oben aus dem Rohr 3 heraus und die Dämpfungsvorrichtung bewegt sich wieder in ihre Ausgangslage gemäß Fig. 5 zurück.

Durch die beschriebene Konstruktion der erfindungsgemäßen Dämpfungsvorrichtung wird beim nach unten Bewegen des stabförmigen Körpers 5 eine Dämpfung der Bewegung des stabförmigen Körpers 5 relativ zum Rohr 3 erreicht durch:
a) Wirkung der Gasdruckfeder (Zusammendrücken des Gaspolsters im unteren Teil des Rohres 3),
b) Zusammendrücken der Schraubendruckfeder 17 zwischen dem stabförmigen Körper 5 und dem Boden 19 des Rohres 3 und
c) Reibung zwischen der Innenfläche des Rohres 3 und dem Umfang der wulstartig verformten Außenfläche der Einlage 13 aus elastischem Werkstoff.

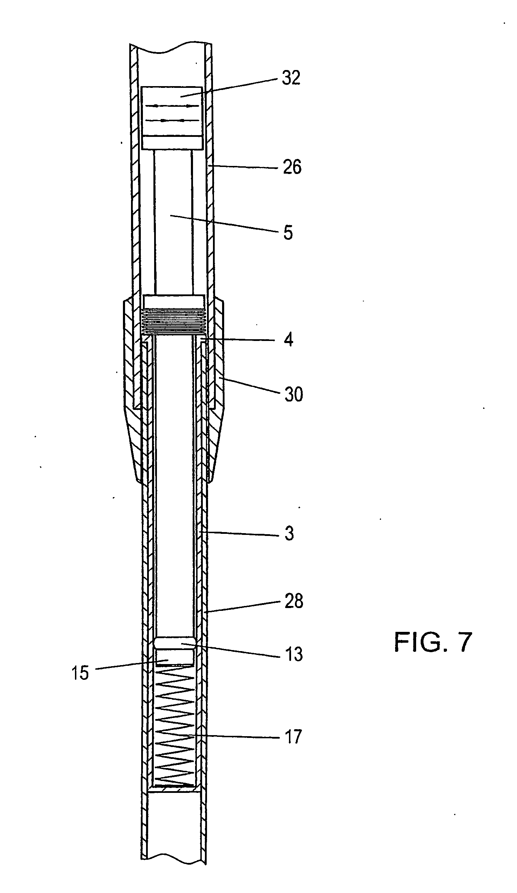

In Fig. 6 ist ein Schistock 20 gezeigt. In Fig. 7 ist im Axialschnitt gezeigt, wie die an Hand der Fig. 1 bis 5 hinsichtlich ihres Aufbaues und ihrer Funktion beschriebene Dämpfungsvorrichtung gemäß einem Ausführungsbeispiel der Erfindung in den Stock 20 mit Griff 24 eingebaut sein kann.

Die Fig. 6 zeigt schematisch einen Schistock 20, dessen Stockrohr 22 in seinem an den Griff 24 anschließenden Teil aus zwei relativ zueinander verschiebbaren Teilen, nämlich einem Teleskop-Oberteil 26 und einem Teleskop-Mittelteil 28 besteht.

In Fig. 7 ist die in Fig. 6 mit Detail 1 bezeichnete Einzelheit des Schistockes 20 von Fig. 6 teilweise im Schnitt dargestellt.

Aus Fig. 7 ist ersichtlich, dass der Teleskop-Oberteil 26 des Stockrohres 22 über den Teleskop-Mittelteil 28 des Stockrohres 22 gesteckt ist, wobei das untere Ende des Teleskop-Oberteils 26 mit einer Manschette 30 verkleidet ist.

Der Teleskop-Oberteil 26 des Stockrohres 22 ist mit dem stabförmigen Körper 5 der Dämpfungsvorrichtung gemäß Fig. 1 bis 5 gekuppelt, so dass, beispielsweise beim Aufsetzen des Stockes 20 auf einen Boden, über den Griff 24 auf den Teleskop-Oberteil 26 ausgeübter Druck bewirkt, dass der stabförmige Körper 5, wie in den Fig. 1 bis 3 gezeigt, nach unten verschoben wird.

Die Kupplung 32 zwischen dem Teleskop-Oberteil 26 und dem stabförmigen Körper 5 der Dämpfungsvorrichtung kann nach Art eines radial spreizbaren Klemmteiles, wie er für längenveränderbare Sportstöcke bekannt ist und der durch Relativverdrehen der Teleskop-Teile 26 und 28 betätigt werden kann, ausgebildet sein.

In dem oberen Ende des Teleskop-Mittelteils 28 des Stockrohres 22 ist die erfindungsgemäße Dämpfungsvorrichtung mit ihrem Rohr 3 aufgenommen, wobei das Rohr 3 mit einem oberen Endflansch 4 am freien Ende des Teleskop-Mittelteils 28 aufliegt.

Zusammenfassend kann ein Ausführungsbeispiel der Erfindung wie folgt erläutert werden:

Eine zwischen einem Griff 24 und einem Stockrohr 22 eines Sportstokkes 20, wie Schistock, vorgesehene Dämpfungsvorrichtung vereinigt die Wirkung einer Schraubendruckfeder 17 mit der einer Gasdruckfeder, wobei in einem Rohr 3 ein stabförmiger Körper 5 verschiebbar ist. Am Ende des stabförmigen Körpers 5 ist eine elastische Einlage 13 vorgesehen, die von der Schraubendruckfeder 17 belastet wird. Wird der stabförmige Körper 5 in das Rohr 3 gedrückt - z.B. beim Aufsetzen des Stockes 20 am Boden - verformt sich die Einlage 13 und liegt dichtend von innen am Rohr 3 an, wodurch eine Gasdruckfeder gebildet ist. Die Dämpfungswirkung wird durch die Reibung der verformbaren Einlage 13 im Rohr 3 zunehmend verstärkt.

## Patentansprüche

1. Vorrichtung zum Dämpfen der Relativbewegung zwischen einen Griff (24) und einem Stab (22) eines Stocks (20), wobei der Griff (24) relativ zum Stab (22) beweglich ist, wobei zwischen dem Griff (24) und dem Stab (22) eine Gasdruckfeder und eine Schraubendruckfeder (17) vorgesehen ist, wobei an einem stabförmigen Körper (5) an seinem in einem Rohr (3) aufgenommenen Ende eine Dichtung (13) vorgesehen ist, **dadurch gekennzeichnet, dass** das Rohr (3), in dem der stabförmige Körper (5) mit seinem unteren Ende aufgenommen ist, ein einseitig geschlossenes Rohr (3) ist, dass die Schraubendruckfeder (17) zwischen dem im Rohr (3) aufgenommenen Ende des stabförmigen Körpers (5) und dem Boden (19) des Rohres (3) eingespannt ist, und dass die elastische Einlage (13), die der stabförmige Körper (5) an seinem Ende, das im Rohr (3) aufgenommen ist, trägt, bei Druck auf den stabförmigen Körper (5) in Richtung des Verschiebens in das Rohr (3) hinein durch die Schraubendruckfeder (17) so verformt wird, dass sie sich an der Innenfläche des Rohres (3) anlegt.

2. Vorrichtung nach Anspruch 1, **dadurch gekennzeichnet, dass** sich die Schraubendruckfeder (17) an der Einlage (13) aus elastischem Werkstoff über eine relativ zum stabförmigen Körper (5) bewegliche Zwischenscheibe (15) abstützt.

3. Vorrichtung nach Anspruch 1 oder 2, **dadurch gekennzeichnet, dass** am stabförmigen Körper (5) außerhalb seines im Rohr (3) aufgenommenen Teils ein ringförmiger Endanschlag (9) vorgesehen ist.

4. Vorrichtung nach Anspruch 3, **dadurch gekennzeichnet, dass** am offenen Ende des Rohres (3) eine Endanschlagdämpfung (11) vorgesehen ist.

5. Vorrichtung nach Anspruch 4, **dadurch gekennzeichnet, dass** bei in das Rohr (3) hineingeschobenem stabförmigen Körper (5) der ringförmige Endanschlag (9) an der Endanschlagdampfung (11) anliegt und diese zwischen dem offenen Ende des Rohres (3) und dem Endanschlag (9) klemmt.

6. Vorrichtung nach einem der Ansprüche 1 bis 5, **dadurch gekennzeichnet, dass** das Rohr (3) das Stockrohr (22) eines (Sport-)Stockes (20) ist.

7. Vorrichtung nach einem der Ansprüche 1 bis 5, **dadurch gekennzeichnet, dass** das Rohr (3) innerhalb eines Stockrohres (22) eines (Sport-)Stockes (20) angeordnet ist.

8. Vorrichtung nach Anspruch 7, **dadurch gekennzeichnet, dass** der stabförmige Körper (5) der Dämpfungsvorrichtung (1) mit dem griffseitigen Teil (26) eines aus zwei teleskopartig ineinanderschiebbaren Teilen (26, 28) bestehenden Stockrohres (22) gekuppelt ist.

9. Vorrichtung nach Anspruch 8, **dadurch gekennzeichnet, dass** die Kupplung (32) zwischen dem stabförmigen Körper (5) und dem Teil (26) des Stockrohres (22) lösbar ist.

10. Vorrichtung nach Anspruch 8 oder 9, **dadurch gekennzeichnet, dass** der Griff (24) auf dem einen Teil (26) des aus zwei teleskopartig ineinander geschobenen Teilen (26, 28) bestehenden Stockrohres (22) angeordnet ist.

## Claims

1. Device for damping the relative motion between a handle (24) and a rod (22) of a pole (20), the handle (24) being movable relative to the rod (22), between the handle (24) and the rod (22) there being a gas compression spring and a helical compression spring (17), on the rod-shaped body (5) on its end held in the tube (3) there being a seal (13), **characterized in that** the tube (3) in which the rod-shaped body (5) is held with its lower end is a tube (3) closed on one side, that the helical compression spring (17) is clamped between the end of the rod-shaped body (5) held in the tube (3) and the bottom (19) of the tube (3), and that the elastic insert (13) which the rod-shaped body (5) bears on its end which is held in the tube (3) when there is pressure on the rod-shaped body (5) in the direction of displacement into the tube (3) is deformed by the helical compression spring (17) such that it lies against the inner surface of the tube (3).

2. Device according to claim 1, **characterized in that** the helical compression spring (17) is supported on the insert (13) of elastic material via an intermediate disk (15) which can move relative to the rod-shaped body (5).

3. Device according to claim 1 or 2, **characterized in that** there is a ring-shaped end stop (9) on the rod-shaped body (5) outside its part held in the tube (3).

4. Device according to claim 3, **characterized in that** there is an end stop damper (11) on the open end of the tube (3).

5. Device according to claim 4, **characterized in that** when the rod-shaped body (5) is pushed into the tube (3) the ring-shaped end stop (9) adjoins the end stop damper (11) and clamps it between the open end of the tube (3) and the end stop (9).

6. Device according to one of claims 1 to 5, **characterized in that** the tube (3) is a pole tube (22) of an (athletic) pole (20).

7. Device according to one of claims 1 to 5, **characterized in that** the tube (3) is located within the pole tube (22) of an (athletic) pole (20).

8. Device according to claim 7, **characterized in that** the rod-shaped body (5) of the damping device (1) is coupled to the handle-side part (26) of a pole tube (22) consisting of two parts (26, 28) which can be telescoped into one another.

9. Device according to claim 8, **characterized in that** the coupling (32) between the rod-shaped body (5) and the part (26) of the pole tube (22) can be released.

10. Device according to claim 8 or 9, **characterized in that** the handle (24) is located on one part (26) of the pole tube (22) consisting of two parts (26, 28) which are telescoped into one another.

## Revendications

1. Dispositif pour amortir le déplacement relatif entre une poignée (24) et une tige (22) d'une canne (20), la poignée (24) étant mobile par rapport à la tige (22), un ressort de compression à gaz et un ressort de compression cylindrique (17) étant prévu entre la poignée (24) et la tige (22), un joint (13) étant prévu sur un corps en forme de tige (5), à l'extrémité de celui-ci logée dans un tube (3), **caractérisé en ce que** le tube (3), dans lequel le corps en forme de tige (5) est logé par son extrémité inférieure, est un tube (3) fermé d'un côté, **en ce que** le ressort de compression cylindrique (17) est serré entre l'extrémité du corps en forme de tige (5) logée dans le tube (3) et le fond (19) du tube (3), et **en ce que** l'insert élastique (13) porté par le corps en forme de tige (5) à son extrémité logée dans le tube (3) est déformé par le ressort de compression cylindrique (17), lors d'un effort exercé sur le corps en forme de tige (5) dans la direction du déplacement vers l'intérieur du tube (3), de telle sorte qu'il vient en appui sur la surface intérieure du tube (3).

2. Dispositif selon la revendication 1, **caractérisé en ce que** le ressort de compression cylindrique (17) est en appui sur l'insert (13) en un matériau élastique par l'intermédiaire d'une rondelle intermédiaire (15) mobile par rapport au corps en forme de tige (5).

3. Dispositif selon la revendication 1 ou 2,
**caractérisé en ce qu'**une butée de fin de course annulaire (9) est prévue sur le corps en forme de tige (5), à l'extérieur de sa partie logée dans le tube (3).

4. Dispositif selon la revendication 3, **caractérisé en ce qu'**un amortisseur de fin de course (11) est prévu à l'extrémité ouverte du tube (3).

5. Dispositif selon la revendication 4, **caractérisé en ce que**, lorsque le corps en forme de tige (5) est enfoncé dans le tube (3), la butée de fin de course annulaire (9) est en appui sur l'amortisseur de fin de course (11) et coince celui-ci entre l'extrémité ouverte du tube (3) et la butée de fin de course (9).

6. Dispositif selon l'une des revendications 1 à 5, **caractérisé en ce que** le tube (3) est la tige de canne (22) d'une canne (de sport) (20).

7. Dispositif selon l'une des revendications 1 à 5, **caractérisé en ce que** le tube (3) est disposé à l'intérieur d'une tige de canne (22) d'une canne (de sport) (20).

8. Dispositif selon la revendication 7, **caractérisé en ce que** le corps en forme de tige (5) du dispositif d'amortissement (1) est couplé avec la partie (26) du côté de la poignée d'une tige de canne (22) composée de deux parties (26, 28) pouvant être introduites l'une dans l'autre de manière télescopique.

9. Dispositif selon la revendication 8, **caractérisé en ce que** l'accouplement (32) entre le corps en forme de tige (5) et la partie (26) de la tige de canne (22) peut être desserré.

10. Dispositif selon la revendication 8 ou 9, **caractérisé en ce que** la poignée (24) est disposée sur la partie (26) de la tige de canne (22) composée de deux parties (26, 28) pouvant être introduites l'une dans l'autre de manière télescopique.
